# EUROPÄISCHE PATENTSCHRIFT

(11) **EP 4 058 301 B1**
(45) Veröffentlichungstag und Bekanntmachung des Hinweises auf die Patenterteilung: **21.10.2026**
(21) Anmeldenummer: 20812318.2
(22) Anmeldetag: 25.11.2020
(51) Int. Cl.: B60B 21/00, B29C 70/68, B29B 11/16, B29B 15/08, B29C 70/48, B29C 70/46, B29C 70/12, B29C 70/22, B29C 70/84, B60B 5/02, B29C 37/00, B29C 70/08

(54) **VERFAHREN ZUR HERSTELLUNG EINES FASERVERBUNDKÖRPERS SOWIE FASERVERBUNDKÖRPER**
METHOD FOR PRODUCING A FIBRE COMPOSITE BODY AND FIBRE COMPOSITE BODY
PROCÉDÉ DE PRODUCTION D'UN CORPS COMPOSITE FIBREUX ET CORPS COMPOSITE FIBREUX

(30) Priorität: 18.12.2019 DE 102019135001
(43) Veröffentlichungstag der Anmeldung: 21.09.2022
(73) Patentinhaber: Action Composites GmbH, 4910 Ried im Innkreis (AT)
(72) Erfinder: WERNER, Jens, 01640 Coswig (DE); MÄKE, Sandro, 01796 Dohma (DE); FRANKE, Michael, 01239 Dresden (DE); KÖHLER, Christian, 01099 Dresden (DE); FRANKE, Florian, 01127 Dresden (DE); DRESSLER, Michael, 01159 Dresden (DE); BARTSCH, André, 01159 Dresden (DE)
(74) Vertreter: Kailuweit & Uhlemann Patentanwälte Partnerschaft mbB
(86) Internationale Anmeldenummer: PCT/EP2020/083359
(87) Internationale Veröffentlichungsnummer: WO 2021/121886

(56) Entgegenhaltungen:
- DE-A1- 102006 002 198
- DE-A1- 102013 103 039
- DE-A1- 4 223 290
- DE-U1- 20 120 447
- JP-A- 2018 192 717
- US-A1- 2017 335 083

## Beschreibung

Die Erfindung betrifft ein Verfahren zur Herstellung eines Faserverbundkörpers sowie einen Faserverbundkörper.

Eine Anwendung von Faserverbundwerkstoffen ist heutzutage aufgrund ihrer mechanischen Eigenschaften weit verbreitet und gewinnt zunehmend an Bedeutung. Speziell aufgrund des geringen Gewichts und der hohen mechanischen Belastbarkeit sind Faserverbundwerkstoffe und Komponenten aus derartigen Materialien beispielsweise für die Luftfahrt- und/oder die Automobilindustrie interessant.

Üblicherweise werden bei Faserverbundkörpern, also Teilen aus einem Faserverbundmaterial, sogenannte Einlegeteile benötigt. Diese Einlegeteile dienen einer mechanischen Stabilisierung von Bereichen eines Faserverbundkörpers, in denen beispielsweise Wandstärkensprünge und/oder Geometrieänderungen vorliegen. Aber auch Bereiche, die einer besonderen mechanischen Belastung ausgesetzt sind, wie beispielsweise Verschraubungsbereiche oder Anschlagpunkte, sind typische Anwendungsbeispiele bei denen Einlegeteile herangezogen werden. Diese dienen dann einer zusätzlichen mechanischen Verstärkung dieses Bereiches.

Die US 2017 / 0 335 083 A1 beschreibt thermoplastische, expandierbare Mikrokugeln mit niedriger Dichte. Verschiedene Strukturen mit niedriger Dichte, insbesondere Sandwich-Paneele, die auf einem aus den Mikrokugeln mit niedriger Dichte hergestellten Schaum basieren, werden ebenfalls offengelegt. Verfahren zur Herstellung von polymeren Mikrokugeln mit niedriger Dichte an sich und die entsprechenden Strukturen mit niedriger Dichte auf der Grundlage des Mikrokugelschaums werden ebenfalls offenbart.

Gegenstand der DE 10 2006 002 198 A1 ist ein Verfahren, bei dem eine Verstärkungsfaserstruktur teilweise mit Matrixmaterial geflutet und dieses ausgehärtet wird. An dem Bereich, der nicht mit Matrixmaterial versehen ist, wir eine zweite Verstärkungsfaserstruktur angeordnet. Diese wird mit Matrixmaterial geflutet, wobei dieses auch in den bisher unbenetzten Bereich der ersten Verstärkungsfaserstruktur eindringt. Dort verschränkt es formschlüssig mit Strukturen des bereits ausgehärteten ersten Matrixmaterials. Nach dem Aushärten auch des zweiten Matrixmaterials entsteht eine verbundene Gesamtstruktur.

Die DE 10 2013 103 039 A1 beschreibt ein Verfahren, mehrere Schichten von Faserverstärkungsmaterial zu einem Vorformling zu verbinden, indem die Schichten sukzessive aufeinandergestapelt und an den vorgesehenen Verbindungskanten der Einzelschichten Bindemittel aufgebracht und dieses ausgehärtet wird.

Gegenstand der JP 2018 192 717 A ist ein Verfahren zur Herstellung einer faserverstärkten Preforms. Es werden Schnitzel von Bandabschnitten, in denen die Fasern unidirektional ausgerichtet sind, gemeinsam mit einem Bindemittel auf eine Unterlage aufgerieselt. Anschließend wird das Material Druck und Temperatur ausgesetzt, um einen Zusammenhalt der Bandschnitzel zu erreichen. Anschließend wird ein Zwischenmaterial aus einem Fasermaterial (vorzugsweise ein nichtgewebter Stoff (nonwoven fabric)) auf die Lage bzw. die Lagen aus Bandschnitzeln aufgebracht. Auch hier erfolgt ein Zusammenhalten mittels eines Bindemittels. Anschließend erfolgt die Formgebung und Matrixmaterialinjektion in einem RTM-Werkzeug.

Speziell bei Rädern, also Felgen aus einem Faserverbundwerkstoff, beispielsweise Carbon, sind derartige Bereiche beispielsweise der Nabenbereich (Anbindung an das Fahrzeug) und das Felgenbett.

Aus der EP 2 788 200 B1 ist ein Einlegeteil aus einem Kunststoffmaterial zu entnehmen, dass mittels Tiefziehen, Spritzgussverfahren oder Thermoformen hergestellt wird. Um hierbei eine Grenzschicht zwischen dem Einlegeteil und einer dieses umgebenden Preform-Struktur widerstandsfähig zu gestalten, ist üblicherweise eine Oberflächenaktivierung notwendig, was diese Ausgestaltung aufwendig und teuer macht.

Die WO 2019 / 033 173 A1 beschreibt ein vorgeformtes Einlegeteil aus einem Faserverbundmaterial, welches ausgehärtet wird und spezielle mechanische Eigenschaften aufweist für eine an die Aushärtung nachfolgende Infiltration mit einer Preform-Struktur eines Rades. Das Einlegeteil weist hierbei mindestens eine Lage aus unidirektionalen Fasern, eine Lage multiaxialen Fasergeleges und eine Lage Vlies auf. Gegebenenfalls können hierbei noch Füllstoffe wie beispielsweise Glas, Hohlkugeln, Kieselsäure, Epoxy/Härter sowie zerkleinerte und/oder gemahlene Kohlenstofffasern oder eine Kombination hieraus beigefügt werden.

Die entstehende Grenzschicht zwischen Einlegeteil und Preform-Struktur kann als werkstoffliche Kerbe und somit als Schwächung verstanden werden. Infolge dieser

Schwächung kann es zur Ablösung zwischen Einlegeteil und Preform-Struktur kommen. Somit müssen die Oberflächen aufwendigen Reinigungsverfahren, wie z.B. einer Oberflächenaktivierung unterzogen werden. Weiterhin ist es wünschenswert, entstandene Toleranzen zwischen Einlegeteil, Preform-Struktur und Infiltrationsform ausgleichen zu können. Dies ist wichtig, um einen homogenen und hohen Faservolumengehalt des Endbauteils zu erreichen. Ausgehend hiervon liegt der Erfindung die Aufgabe zugrunde, ein Verfahren zur Herstellung eines Faserverbundkörpers anzugeben, welches aufwandsarm und kostengünstig ist. Ferner liegt der Erfindung die Aufgabe zugrunde, einen teil-elastischen Faserverbundkörper anzugeben, der infolge seiner elastischen Kompressibilität Toleranzen ausgleichen, sich aber auch in hohem Maße an angrenzende Strukturen (Preform, weitere Einlegeteile) anschmiegen kann.

Mit Blick auf das Verfahren wird die Aufgabe erfindungsgemäß gelöst durch ein Verfahren zur Herstellung eines Faserverbundkörpers mit den Merkmalen des Anspruchs 1. Mit Blick auf den Faserverbundkörper wird die Aufgabe erfindungsgemäß gelöst durch einen Faserverbundkörper mit den Merkmalen des Anspruchs 9.

Bevorzugte Ausgestaltungen, Weiterbildungen und Varianten sind Gegenstand der Unteransprüche. Die im Hinblick auf das Verfahren aufgeführten Vorteile und bevorzugten Ausgestaltungen sind sinngemäß auf den Faserverbundkörper zu übertragen und umgekehrt.

Konkret wird die auf das Verfahren gerichtete Aufgabe gelöst durch ein Verfahren zur Herstellung eines Faserverbundkörpers, wobei es sich bei dem Faserverbundkörper insbesondere um zumindest einen Teil eines Rades und speziell um eine Felge für ein Kraftfahrzeug handelt. Das Verfahren umfasst die folgenden Schritte:
Zunächst wird eine erste Form mit wenigstens einer Matrize und einer Patrize bereitgestellt. Unter der Matrize kann hierbei eine Negativform zumindest eines Teils des Faserverbundkörpers verstanden werden. Unter der Patrize kann hierbei das zu der Matrize komplementär/korrespondierend ausgebildete Gegenstück verstanden werden, sodass ein Zwischenraum zwischen der Matrize und der darauf angeordneten Patrize die Außenkontur zumindest eines Teils des herzustellenden Faserverbundkörpers ausbildet. Die Patrize kann jedoch auch als eine Membran ausgebildet sein, die entweder ebenfalls komplementär/korrespondierend zur Matrize ausgebildet ist oder alternativ flächig, also eben ausgebildet ist.

Anschließend werden ein Faserrohmaterial sowie ein Bindemittel in die Matrize eingebracht. Dabei fungiert das Bindemittel als Fixierung des Faserrohmaterials zu einer schwammartigen, festen Struktur, deren Hohlräume bei einer Infiltration gefüllt werden. Bei dem Faserrohmaterial kann es sich beispielsweise um Faserschnitzel aus organischem, anorganischem oder Naturfaserwerkstoff, vorzugsweise Kohlenstoff-, Aramid- oder um Hanf-, Holz- und Sisalfasern handeln. Dabei bedeutet der Begriff Faserschnitzel kleingeschnittene Faserhalbzeuge oder Fasern. Bei dem Bindemittel kann es sich hierbei um ein duroplastisches (Epoxy) oder um ein thermoplastisches (hotmelt) Bindepulver oder um ein Gemisch aus beidem handeln. Mit anderen Worten handelt es sich bei dem Bindemittel vorzugsweise um einen pulverisierten thermisch, induktiv oder UV-Licht aktivierbaren Klebstoff. Weiterhin ist die Verwendung eines vorbebinderten Faserhalbzeuges aus oben genannten Fasertypen möglich. Durch Über- oder Unterbefüllen der ersten Form lassen sich verschiedene Faservolumenanteile im Bereich von 30%-70% einstellen. Idealerweise wird ein Faservolumenanteil von 50% eingestellt.

Zum besseren Verständnis beziehen sich die folgenden Ausführungen auf Langfaserschnitzel und thermisch aktivierbare Bindersysteme.

Daran anschließend wird die Form verschlossen, indem die Patrize nach Art eines Deckels auf der Matrize angeordnet wird. Anschließend erfolgt ein Energieeintrag in die Form, durch den ein Aktivieren des Bindemittels erfolgt. Der Energieeintrag erfolgt bevorzugt durch eine Druck- und/oder Temperaturbeaufschlagung der Form, sodass hierdurch ein diffusionsoffenes Formelement ausgebildet wird. Unter diffusionsoffen kann hierbei verstanden werden, dass es durchlässig, also offenporig, ausgebildet ist und hierbei jedoch eine ausreichende Festigkeit aufweist, um beispielsweise die Preform-Struktur zu tragen. Dieser Verfahrensschritt wird auch als Preforming bezeichnet. Das Formelement weist hierdurch eine endkonturnahe Verbundstruktur auf. Ferner ist es möglich, sogenannte bereits vorgefertigten Preform- oder Wetpregschalen heranzuziehen, die in die Form eingelegt werden und anschließend mit dem Faserrohmaterial hinterfüllt werden. Es ist hierbei nahezu jede körperliche Struktur als Faserverbundkörper herstellbar.

Die Temperatur, mit der die Form beaufschlagt wird, weist bevorzugt einen Wert im Bereich von 70 ° c bis 180 ° c auf. Der Druck, mit dem die Form zur Ausbildung des Formelements beaufschlagt wird, weist hierbei bevorzugt einen Wert zwischen 0,1 MPa und 10 MPa und insbesondere zwischen 2 MPa und 8MPa.

Bei dem Formelement kann es sich hierbei bevorzugt um einen Felgenstern oder um einen Nabenring handeln. Letzterer wird beispielsweise konzentrisch um eine Nabe einer Felge angeordnet, um hier als Einlegeteil kraftunterstützend im Sinne einer Lasteinleitung zu wirken und in diesem Bereich die mechanische Stabilität zu erhöhen.

Im nächsten Schritt wird das ausgebildete diffusionsoffene Formelement mit einer Preform-Struktur zusammengefügt. Hierbei kann es sich bei der Preform-Struktur um Teile eines Rades für ein Kraftfahrzeug handeln. So ist beispielsweise die Preform-Struktur, bei Ausbildung des diffusionsoffenen Formelements als Felgenstern, das Felgenbett mit Speichenteilen. Mit anderen Worten, also der Rest der Felge. Alternativ kann die Preform-Struktur auch weitere Speichenteile und/oder weitere Felgenteile ausbilden.

Im Rahmen der vorliegenden Erfindung wird unter Zusammenfügen des Formelements und einer Preform-Struktur beispielsweise ein Anordnen des Formelements an einer Preform-Struktur verstanden, insbesondere ein formschlüssiges Verbinden durch wechselseitiges Ineinandergreifen korrespondierend zueinander angeordneter geometrischer positiv- und negativ-Strukturen an mindestens einer der zueinander angeordneten Kontaktbereiche und/oder ein stoffschlüssiges Verbinden durch aktiviertes Bindemittel zwischen den aneinander angeordneten Kontaktbereichen, wobei das Aktivieren beispielsweise durch einen weiteren Energieeintrag erfolgt.

Beispielsweise werden, um das Formelement mit der Preform-Struktur zusammenzufügen, diese zunächst in eine Endposition ausgerichtet. Unter der Endposition kann hierbei verstanden werden, dass die beiden Teile (Formelement und Preform-Struktur) derart ausgerichtet und zusammengefügt werden, wie sie in einem späteren Zustand den Faserverbundkörper ausbilden sollen. Hierfür können Hilfsformen oder -vorrichtungen genutzt werden. Formelement und Preform-Struktur werden danach in einer zweiten, eine Kavität ausformenden, Form überführt. Üblicherweise ist die dann verwendete Hilfsform, auch als zweite Form bezeichnet, hierbei von der ersten Form verschieden.

Anschließend wird ein Harz zugeführt, welches vorzugsweise das gesamte diffusionsoffene Formelement und die Preform-Struktur zumindest bereichsweise infiltriert. Unter Infiltrieren kann hierbei verstanden werden, dass das Harz durch die offenporige Ausbildung des Formelements in Zwischenräume der Struktur des Formelements eindringt und diese umspült.

Hiernach wird das Harz ausgehärtet. Dies erfolgt vorzugsweise durch einen zweiten, erneuten Energieeintrag in Form einer Druckbeaufschlagung und/oder einer Temperaturbeaufschlagung, sodass hierdurch der Faserverbundkörper grenzschichtfrei ausgebildet wird. Alternativ ist jedoch in Abhängigkeit der verwendeten Materialien auch eine Kaltaushärtung ohne eine zweite Temperaturbeaufschlagung möglich. Vorzugsweise wird das gesamte Formelement durch die Infiltration form- und stoffschlüssig mit der Preform-Struktur verbunden. Somit wird analog zu bereits vorstehend genanntem Beispiel die komplette Felge als Faserverbundkörper ausgebildet.

Daran anschließend wird nach einem Öffnen der zweiten Form der Faserverbundkörper aus dieser entnommen.

Durch das vorstehend beschriebene Verfahren und insbesondere den Schritt des zumindest bereichsweise Infiltrierens des diffusionsoffenen Formelements mit der Preform-Struktur ist im Gegensatz zu eingangs genanntem Stand der Technik eine Mikroverzahnung zwischen Formelement und Preform-Struktur erreicht. Infolge des gemeinsamen Infiltrierens und Aushärtens von Formelement und Preformstruktur (auch als Co-Curing bezeichnet), weist der Faserverbundkörper keine (chemische) Grenzschicht auf. Dies führt vorteilhafterweise zu einer Steigerung der mechanischen Eigenschaften des Faserverbundkörpers. Weiterhin ist dieses Verfahren kostengünstig und erlaubt eine sogenannte Netshape-Fertigung. Unter der Netshape-Fertigung wird hierbei verstanden, dass der hergestellte Faserverbundkörper nach der Entnahme aus der Form nicht mehr mechanisch oder anderweitig nachbearbeitet werden muss, was wiederum Vorteile hinsichtlich eines Prozessstandards und im Hinblick auf die Herstellungskosten aufweist.

Speziell bei dem als Rad ausgebildeten Faserverbundkörper ist somit eine ausreichende mechanische Stabilität, insbesondere in den bereits eingangs erwähnten Bereichen, bei einer - im Vergleich zu anderen Materialien - deutlich ausgeprägten Gewichtsersparnis erreicht. Die erhöhte mechanische Stabilität ist hierbei insbesondere auf das auch als Einlegeteil bezeichnete Formelement zurückzuführen, welches durch das vorstehend beschriebene Verfahren bereits innerhalb des Herstellungsprozesses an der erforderlichen Stelle angeordnet und insbesondere durch das form- und stoffschlüssige Verbinden Teil des Faserverbundkörpers wird.

Die Herstellung des Einlegeteils, die Positionierung des Einlegeteils in dem Faserverbundkörper und die Herstellung des Faserverbundkörpers sind somit keine drei sich aneinander anschließenden Verfahren, sondern werden in einem Verfahren zusammengeführt.

Bevorzugt wird dem Faserrohmaterial ein Füllmaterial beigemischt. Unter dem Füllmaterial kann hierbei beispielsweise ein Schaumgranulat, Hohlglaskugeln oder/und eine geschlossenzellige Hohlstruktur verstanden werden. Hierdurch ist eine weitere Gewichtsreduktion erreicht, ohne signifikant an mechanischer Stabilität einzubüßen.

In einer Ausführungsform ist dem Faserrohmaterial alternativ oder ergänzend ein Polyimid-Material beigemischt. Dieses Material führt zu einer Expansion während des Preformprozesses, also während der ersten Druck- und Temperaturbeaufschlagung der Form. Hierdurch wird eine Erhöhung der Dichte des Formelements erreicht, was wiederum zu einer Erhöhung der mechanischen Stabilität beiträgt.

Alternativ hierzu erfolgt ein "Verpressen" des mit dem Polyimid-Material gemischten Faserrohmaterials durch ein Befüllen der zumindest einen Form über eine maximale Füllmenge hinweg und einem mechanischen Verpressen beim Verschließen der zumindest einen Form.

Gemäß einer Ausführungsform werden eine oder mehrere Textillagen in das diffusionsoffene Formelement integriert. Hierbei kann es sich bei den Textillagen beispielsweise um Laschen handeln, die zu einer späteren Anbindung des Formelements an die Preform-Struktur dienen. Die Integration der einen oder der mehreren Textillagen erfolgt hierbei vorzugsweise im Rahmen der Ausbildung des Formelements, also beispielsweise vor der ersten Druck- und Temperaturbeaufschlagung, sodass die eine oder mehrere Textillage Teil des Formelements wird.

Alternativ oder ergänzend werden beim Zusammenfügen des Formelements mit der Preform-Struktur eine oder mehrere Textillagen integriert. Der Integration der einen oder mehreren Textillagen liegt der Gedanke zugrunde, dass hierdurch eine spätere Anbindung des beispielsweise als Felgenstern ausgebildeten Formelements an eine als z.B. Felgenbett ausgebildete Preform-Struktur ermöglicht ist.

Um speziell bei der Ausbildung des Faserverbundkörpers als Felge eine Befestigung an eine Radaufhängung zu ermöglichen, sind gemäß einer bevorzugten Ausführungsform ein oder mehrere Funktionselemente in dem Formelement und/oder der Preform-Struktur angeordnet. Unter dem Funktionselement kann hierbei beispielsweise ein Hülsenelement für eine Radnabenaufnahme oder mehrere Hülsen verstanden werden, die die Durchführungen für Radmuttern oder Stehbolzen der Radaufhängung ausbilden.

Erfindungsgemäß werden Ausformungen im Sinne von Taschen und/oder Senken und/oder spezieller Anbindungsgeometrien ausgeformt, welche zur Einbindung von Lastelementen wie Bändern, Endlosfasern oder schubsteifen Einlegern (z.B.: ±45° -Einleger) genutzt werden können. In einer besonderen Ausführungsform koppeln diese mit Lastelementen, Einlegeteil und Preform-Struktur.

Um eine Verarbeitung sowie die Herstellung des Faserverbundkörpers zu optimieren, erfolgt gemäß einer bevorzugten Ausführungsform die Druckbeaufschlagung mehrstufig. Insbesondere bei der Integration einer oder mehrerer Textillagen, wie bereits vorstehend erwähnt, hat sich eine mehrstufige Druckbeaufschlagung als vorteilhaft erwiesen.

Vorzugsweise erfolgt die Druckbeaufschlagung der Form durch Vakuumpressen oder Überdruckpressen. Alternativ oder ergänzend kann die Druckbeaufschlagung auch durch eine mechanische Schließkraft der Form erfolgen, die beispielsweise durch eine Verschraubung erfolgt. Derartige Verfahren hinsichtlich einer Druckbeaufschlagung der Form sind hinreichend bekannt und vereinfachen somit das Verfahren zur Herstellung des Faserverbundkörpers.

Zweckdienlicherweise wird als Harz ein duroplastisches Harz oder ein thermoplastisches Harz verwendet. Alternativ wird ein Gemisch aus einem derartigen duroplastischen und einem thermoplastischen Harz verwendet.

Gemäß einer Ausführungsform wird das Formelement insbesondere formschlüssig mit einem Struktursegment verbunden. Bei dem Struktursegment kann es sich beispielsweise um radial nach außen gerichtete Speichenanschlüsse handeln, wodurch eine mechanische Stabilität der Speichen erhöht wird.

Mit Blick auf den Faserverbundkörper wird die Aufgabe konkret gelöst durch einen Faserverbundkörper, insbesondere ein Teil eines Rades und speziell ein Teil einer Autofelge aus einem Faserverbundmaterial. Der Faserverbundkörper weist hierbei ein Formelement sowie eine Preform-Struktur auf. Das Formelement und die Preform-Struktur sind hierbei zumindest bereichsweise form- und stoffschlüssig miteinander verbunden.

Zweckdienlicherweise weist das Formelement eine Anbindung zu einem Struktursegment auf, die insbesondere formschlüssig ausgebildet ist. Bei dem Struktursegment kann es sich beispielsweise um ein Strukturschaumsegment handeln, welches nach Art von Speichenanschlüssen des Rades radial nach außen orientiert angeordnet ist. Unter radial nach außen kann hierbei eine Richtung von der Radnabe zum Felgenbett verstanden werden. Dies hat den Vorteil, dass das Formelement und das zumindest eine Struktursegment nicht aufwendig zusammengefügt werden müssen, und somit ein einfacher Aufbau des Faserverbundkörpers mit einer ausreichenden mechanischen Stabilität erreicht ist.

Zweckdienlicherweise ist das Formelement vollständig in die Preform-Struktur integriert, insbesondere vollständig stoffschlüssig und formschlüssig mit der Preform-Struktur verbunden. Hierdurch sind eine nochmals erhöhte mechanische Stabilität und eine ortsnahe Anordnung des als Einlegeteil ausgebildeten Formelements sichergestellt.

Gemäß einer Ausführungsform weist der Faserverbundkörper mehrere Formelemente auf. So kann beispielsweise der als Felge ausgebildete Faserverbundkörper im Bereich der Radnabe ein als Radstern ausgebildetes Formelement und im Bereich eines Reifensitzes, also im Felgenbett, ein oder mehrere Einlegeteile aufweisen.

Ausführungsbeispiele der Erfindung werden nachfolgend anhand der Figuren näher erläutert. Diese zeigen teilweise stark vereinfachten Darstellung:
- Fig. 1: eine Prinzipskizze des erfindungsgemäßen Verfahrens zur Ausbildung eines diffusionsoffenen Formelements,
- Fig. 2: eine perspektivische Ansicht eines Teils eines als Felge ausgebildeten Faserverbundkörpers mit einer Preform-Struktur und einem Formelement,
- Fig. 3: ein skizziertes Formelement mit daran formschlüssig angeordneten Struktursegmenten,
- Fig. 4: eine perspektivische Darstellung eines als Felge ausgebildeten Faserverbundkörpers mit darin angeordnetem Formelement gem. Fig. 3,
- Fig. 5: eine perspektivische Darstellung eines als Felge ausgebildeten Faserverbundkörpers mit zwei im Felgenbettrand angeordneten Formelementen,
- Fig. 6: einen Querschnitt eines Faserverbundkörpers mit darin ausgebildeten Anbindungsgeometrien sowie
- Fig. 7: eine Explosionsdarstellung des in Fig. 6 dargestellten Faserverbundkörpers.

In den Figuren sind gleichwirkende Teile stets mit den gleichen Bezugszeichen dargestellt.

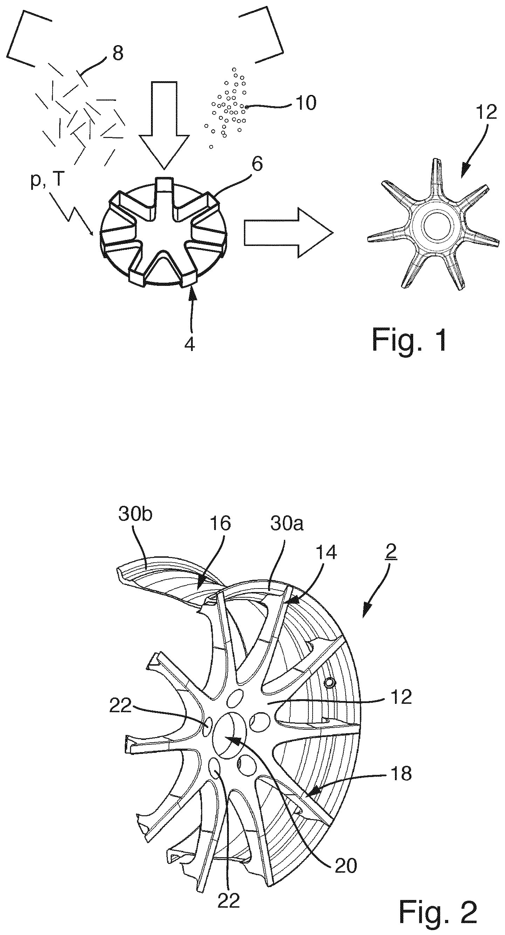

Bei dem in Fig. 1 schematisch dargestellten Verfahren zur Herstellung eines Faserverbundkörpers 2 (vgl. Fig. 2) wird eine Form 4 mit einer Matrize 6 und einer hier nicht dargestellten Patrize bereitgestellt. Die Patrize ist hierbei korrespondierend bzw. komplementär zur Matrize 6 ausgebildet.

Zunächst wird ein Faserrohmaterial 8, beispielsweise Kohlenstoff, Glas oder Naturfasern sowie ein Bindemittel 10 in die Form 4, speziell in die Matrize 6 eingebracht. Bei dem Bindemittel 10 handelt es sich beispielsweise um ein duroplastisches oder thermoplastisches Bindepulver oder um ein Gemisch aus beidem. Nach einem Verschließen der Form 4 wird das Bindemittel 10 aktiviert. Dies erfolgt durch einen Energieeintrag in Form einer Druckbeaufschlagung p sowie einer Temperaturbeaufschlagung T der Form 4. Unter der Druckbeaufschlagung p kann hierbei verstanden werden, dass die Form 4 und insbesondere die Matrize 6 sowie die Patrize mit einem Druck mit einem Wert im Bereich zwischen 0,1 MPa und 10 MPa zusammengepresst werden. Unter der Temperaturbeaufschlagung T kann hierbei verstanden werden, dass die Form 4 auf eine Temperatur mit einem Wert zwischen 70 ° C und 180 ° C erhitzt wird.

Hierdurch wird ein diffusionsoffenes Formelement 12 ausgebildet, welches anschließend und in Fig. 1 nicht gezeigten Preform-Struktur 14 zusammengefügt wird. Nach einem Zuführen eines Harzes, das sowohl das diffusionsoffene Formelement sowie die Preform-Struktur infiltriert, also umspült, erfolgt eine zweite Druckbeaufschlagung p sowie eine optionale zweite Temperaturbeaufschlagung T. Hierdurch wird das Harz ausgehärtet, sodass sich das Formelement 12 und die Preform-Struktur 14 Faserverbundkörper 2 ausbilden.

Ein derartiger Faserverbundkörper 2 ist beispielsweise in Fig. 2 in einer perspektivischen Ansicht zeigt. Fig. 2 zeigt einen Teil einer als Felge ausgebildeten Faserverbundkörpers 2, der eine Preform Struktur 14 sowie ein Formelement 12 aufweist. Das Formelement 12 ist hierbei als Felgenstern ausgebildet, während die Preform-Struktur 14 Felgenbett mit daran angeordneten Speichen 18 ausgebildet ist.

Das Formelement 12 ist somit gemäß Fig. 2 als Felgenstern ausgeformtes Einlegeteil ausgebildet und übernimmt vollumfänglich mechanische Anforderungen an die Struktur, speziell im Bereich der Radnabenaufnahme 20 sowie der Radmutterdurchführungen 22. Üblicherweise treten im Bereich der Radnabenaufnahme 20 und der Radmutterdurchführungen 22 Kräfte auf, bei denen sich eine Anordnung eines als Einlegeteil ausgebildeten Formelements 12 als geeignet erwiesen hat. Die Kräfte werden hierbei zwischen der Radnabenaufnahme 20 und dem Felgenbett 16 übertragen. Alternativ kann im Ausführungsbeispiel gemäß Fig. 2 als Felgenstern ausgebildete Formelement 12 auch von weiteren (Gewebe-)Lagen umschlossen sein.

Zudem alternativ oder ergänzend können weitere nicht gezeigt Funktionselemente in dem Formelement angeordnet und insbesondere integriert sein und beispielsweise die Radnabenaufnahme 20 und/oder die Radmutterdurchführungen 22 auszubilden. Hierbei kommen üblicherweise Hülsen zum Einsatz, die in das Formelement 12 eingesetzt werden.

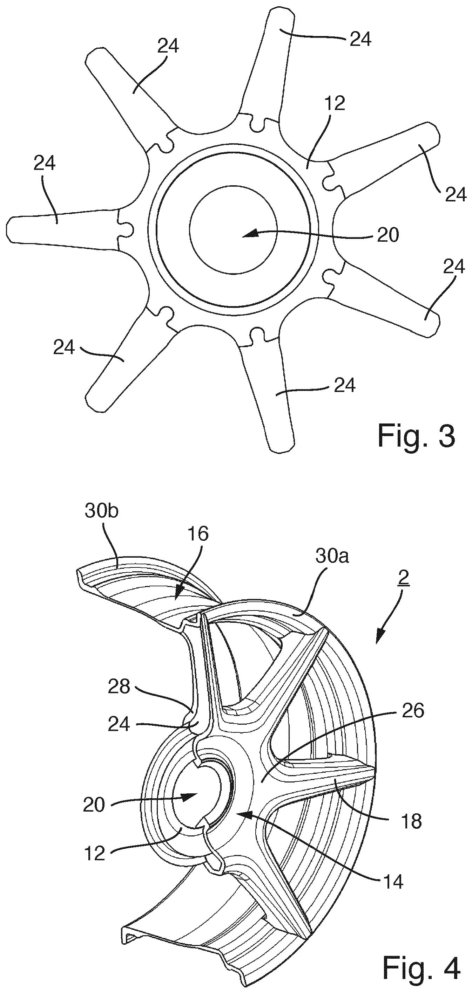

In Fig. 3 ist ein skizziertes Formelement 12 mit daran formschlüssig angeordneten Struktursegmenten 24 gezeigt. Die Anordnung der Struktursegmente 24 an das Formelement 12 erfolgt im Ausführungsbeispiel gemäß Fig. 3 nach Art einer Nut-Feder-Verbindung und somit formschlüssig. Der Formschluss kann jedoch auch durch die Infiltration des Harzes in das diffusionsoffene Formelement 12 erfolgen, sodass eine Mikroverzahnung zwischen dem Formelement 12 und dem Struktursegmenten 24 erfolgt. Die Struktursegmente 24 sind im Ausführungsbeispiel radial nach außen orientiert an dem Formelement 12 angeordnet, sodass das Formelement 12 mit den daran angeordneten Struktursegmenten 24 zumindest einen Teil eines Felgensterns ausbildet.

Die Struktursegmente 24 können somit auch als Speichenanschlüsse bezeichnet werden. Durch die formschlüssige Anordnung der Struktursegmente 24 ist somit zum einen eine einfache Anordnung an das Formelement 12 erreicht und gleichzeitig eine ausreichend hohe Formstabilität gewährleistet.

Fig. 4 zeigt eine perspektivische Darstellung eines ebenfalls als Felge ausgebildeten Faserverbundkörpers 2. Innerhalb des Faserverbundkörpers 2 ist das Formelement 12 mit daran angeordneten Struktursegmenten 24 angeordnet. Bei dem Formelement 12 mit daran angeordneten Struktursegmenten 24 handelt es sich im Wesentlichen um das bereits in Fig. 3 dargestellte Formelement 12. Hierbei ist gut zu erkennen, dass die Struktursegmente 24 einen Teil der Speichen 18 ausbilden und sich somit die durch das Formelement 12 erreichte erhöhte Formstabilität nicht nur auf die Radnabenaufnahme 20 beschränkt, sondern sich in die Speichen 18 erweitert.

Sowohl das als Einlegeteil ausgebildete Formelement 12 als auch die Struktursegmente 24 sind hierbei vollumfänglich von der Preform-Struktur 14 umgeben und insbesondere grenzschichtfrei mit dieser verbunden, sodass sich eine vollständige Mikroverzahnung durch die Infiltration der Preform-Struktur 14 mit dem Formelement 12 sowie den Struktursegmenten 24 ergibt. Die Preform-Struktur 14 ist hierbei in eine äußere Decklage 26 und in eine innere Decklage 28 unterteilt. Die beiden Decklagen 26, 28 sind hierbei beispielsweise aus Kohle- und/oder Aramidfasern ausgebildet.

Das hierbei im Bereich der Radnabenaufnahme 20 angeordnete Formelement 12 ist im Ausführungsbeispiel gemäß Fig. 4 rotationsymmetrisch ausgebildet. Alternativ kann das Formelement 12 auch nicht rotationssymmetrisch ausgeführt sein.

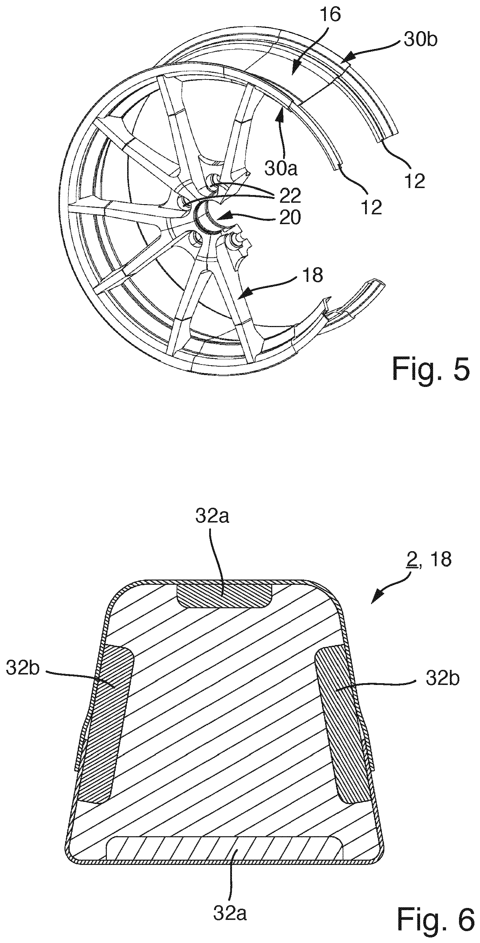

Fig. 5 zeigt eine perspektivische Darstellung eines als Felge ausgebildeten Faserverbundkörpers 2 mit zwei im Felgenbettrand 30 angeordneten Formelementen 12. Hierbei ist jeweils ein Formelement 12 in einem äußeren Felgenbettrand 30a und einem inneren Felgenbettrand 30b angeordnet. Hierbei kann unter dem inneren Felgenbettrand 30b der Felgenbettrand 30 verstanden werden, der in Richtung der Radaufhängung (nicht dargestellt) orientiert ist, während unter dem äußeren Felgenbettrand 30a der Felgenbettrand 30 verstanden werden kann, der von der Radaufhängung weg orientiert ist.

Die beiden Formelemente 12 sind hierbei ebenfalls von der Preform-Struktur 14 vollständig umschlossen und mit dieser form- und stoffschlüssig verbunden. Die beiden Formelemente 12 dienen hier ebenfalls als Einlegeteil zu einer mechanischen Stabilisierung und erhöhen somit eine mechanische Belastbarkeit des Felgenbettes.

Das Ausführungsbeispiel gemäß Fig. 5 mit dem innerhalb des Felgenbettrands 30 angeordneten Formelements 12 ist ebenfalls bei einem sogenannten Hybridrad anwendbar. Unter dem Hybridrad kann hierbei eine Felge verstanden werden, die aus zumindest zwei verschiedenen Materialien gefertigt ist. Beispielsweise kann ein Hybridrad einen metallischen Radstern und ein Felgenbett aus einem Faserverbundwerkstoff aufweisen.

Weiterhin sind durch die als Einlegeteil ausgebildeten Formelemente 12 variable Wandstärken im Bereich des Reifensitzes am Felgenbettrand 30 ermöglicht.

In Fig. 6 ist ein Querschnitt eines Faserverbundkörpers 2 gezeigt. Speziell zeigt Fig. 6 einen Querschnitt durch eine Speiche 18. In dem Faserverbundkörper 2 sind Anbindungsgeometrien als Taschen ausgebildet. In diese Taschen sind Lastelemente 32a für Zug-Druck-Beanspruchungen bzw. Lastelemente 32b für Schubbeanspruchungen eingelegt.

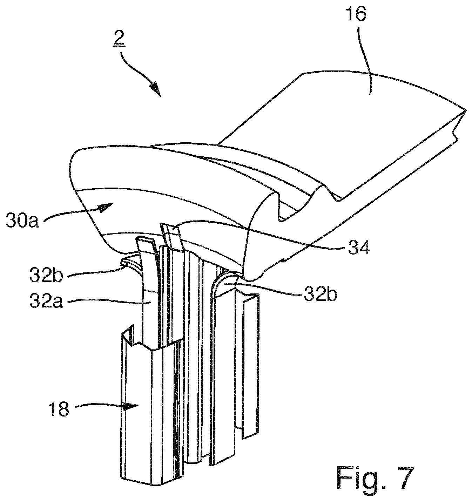

Fig. 7 zeigt einen Teil der in Fig. 6 dargestellten Speiche 18 und deren Anbindung an ein Felgenbett 16 als Explosionsdarstellung. Hierbei sind die Lastelemente 32a, 32b in das Felgenbett 16 eingeführt. Um eine passkonforme Anordnung der Lastelemente 32a, 32b in dem Felgenbett 16 zu erreichen, weist dieses im Ausführungsbeispiel gemäß Fig. 7 Ausnehmungen 34 auf, in denen ein oberer Teil bzw. oberes Ende der jeweiligen Lastelemente 32a, 32b angeordnet ist. Im Ausführungsbeispiel gemäß Fig. 7 ist die Speiche 18 im Wesentlichen rechteckig ausgebildet. Zweckdienlicherweise ist an jeder Seite der Speiche 18 zumindest ein Lastelement 32a für Zug-Druck-Beanspruchungen und/oder ein Lastelement 32b für Schubbeanspruchungen angeordnet. Alternativ können auch mehrere Lastelemente 32a, 32b an jeweils einer Seite der Speiche 18 angeordnet sein.

Bevorzugt liegen die oberen Teile der Lastelemente 32a, 32b bündig in den Ausnehmungen 34 ein, sodass ein plan ausgebildeter und ebener äußerer Felgenbettrand 30a des Felgenbetts 16 ausgebildet ist. Die so in dem Felgenbett 16 angeordneten Lastelemente 32a, 32b dienen einer Erhöhung einer mechanischen Widerstandsfähigkeit der Speiche 18 gegenüber von Zug- und Druckbeanspruchungen. Vorzugsweise weisen alle Speichen 18 eines als Fahrzeugrad ausgebildeten Faserverbundkörpers 2 derartige Lastelemente 32a, 32b auf.

Das freie obere Teil bzw. Ende der jeweiligen Lastelemente 32a, 32b ist nach außen geneigt bzw. nach außen gekrümmt. Die entsprechende Ausnehmung 34 ist angepasst, sodass das Lastelement 32a, 32b, insbesondere das freie obere Ende des jeweiligen Lastelements 32a, 32b plan in der Ausnehmung 34 aufgenommen ist.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen.

### Bezugszeichenliste

- 2: Faserverbundkörper
- 4: Form
- 6: Matrize
- 8: Faserrohmaterial
- 10: Bindemittel
- 12: Formelement
- 14: Preform-Struktur
- 16: Felgenbett
- 18: Speiche
- 20: Radnabenaufnahme
- 22: Radmutteraufnahme
- 24: Struktursegment
- 26: äußere Decklage
- 28: innere Decklage
- 30a: äußerer Felgenbettrand
- 30b: innerer Felgenbettrand
- 32a: Lastelement für Zug-Druck-Beanspruchung
- 32b: Lastelement für Schubbeanspruchung
- 34: Ausnehmungen des Felgenbetts

- P: Druckbeaufschlagung
- T: Temperaturbeaufschlagung

## Patentansprüche

1. Verfahren zur Herstellung eines Faserverbundkörpers (2), insbesondere zumindest eines Teils eines Rades, umfassend die folgenden Schritte:
- Bereitstellen einer ersten Form (4) mit wenigstens einer Matrize (6) und einer Patrize,
- Einbringen eines Faserrohmaterials (8) und eines Bindemittels (10) in die Matrize (6), wobei das Faserrohmaterial (8) kleingeschnittene Faserhalbzeuge oder Fasern ist,
- Aktivieren des Bindemittels (10) durch einen Energieeintrag (p, T) in die Form (4) zur Ausbildung eines diffusionsoffenen Formelements (12) wobei das Formelement (12) eine oder mehrere Ausformungen zur Einbindung koppelnder Lastelemente aufweist,
- Zusammenfügen des Formelements (12) und einer Preform-Struktur (14),
- Zuführen eines Harzes, sodass das Harz zumindest bereichsweise in das diffusionsoffene Formelement (12) sowie in die Preform-Struktur (14) infiltriert, sowie
- Aushärten des Harzes, sodass hierdurch der Faserverbundkörper (2) grenzschichtfrei ausgebildet wird.

2. Verfahren nach dem vorhergehenden Anspruch, **dadurch gekennzeichnet, dass** dem Faserrohmaterial (8) ein Bindemittel beigemischt wird, wobei das Bindemittel bevorzugt thermoplastisch, duroplastisch oder ein Gemisch aus beidem ist.

3. Verfahren nach einem der vorhergehenden Ansprüche, **dadurch gekennzeichnet, dass** dem Faserrohmaterial (8) ein Polyimid-Material beigemischt wird.

4. Verfahren nach einem der vorhergehenden Ansprüche, **dadurch gekennzeichnet, dass** eine oder mehrere Textillagen in das diffusionsoffene Formelement (12) integriert werden und/oder dass beim Zusammenfügen des diffusionsoffenen Formelements (12) mit der Preform-Struktur (14) eine oder mehrere Textillagen integriert werden.

5. Verfahren nach einem der vorhergehenden Ansprüche, **dadurch gekennzeichnet, dass** ein oder mehrere Funktionselemente in dem diffusionsoffenen Formelement (12) und/oder der Preform-Struktur (14) angeordnet, insbesondere integriert werden.

6. Verfahren nach einem der vorhergehenden Ansprüche, **dadurch gekennzeichnet, dass** der Energieeintrag (p, T) mehrstufig und/oder dass der Energieeintrag (p, T) ein Vakuumpressen oder Überdruckpressen oder eine Schließkraft der wenigstens einen Form (4) umfasst.

7. Verfahren nach einem der vorhergehenden Ansprüche, **dadurch gekennzeichnet, dass** eine Matrix aus einem duroplastischen Kunststoff oder aus einem thermoplastischen Kunststoff oder aus einem Gemisch aus duroplastischem und thermoplastischem Kunststoff verwendet wird.

8. Verfahren nach einem der vorhergehenden Ansprüche, **dadurch gekennzeichnet, dass** das diffusionsoffene Formelement (12) insbesondere formschlüssig mit einem Struktursegment (24) verbunden wird.

9. Faserverbundkörper (2), insbesondere Rad, aus einem Faserverbundmaterial mit
- einem diffusionsoffenem Formelement (12) wobei das Formelement (12) eine oder mehrere Ausformungen zur Einbindung koppelnder Lastelemente aufweist, sowie
- einer Preform-Struktur (14) **dadurch gekennzeichnet, dass** das diffusionsoffene Formelement (12) und die Preform-Struktur (14) zumindest bereichsweise grenzschichtfrei miteinander verbunden sind.

10. Faserverbundkörper (2) nach dem vorhergehenden Anspruch, **dadurch gekennzeichnet, dass** das diffusionsoffene Formelement (12) und die Preform-Struktur (14) formschlüssig miteinander verbunden sind.

11. Faserverbundkörper (2) nach einem der beiden vorhergehenden Ansprüche,
**dadurch gekennzeichnet, dass** das diffusionsoffene Formelement (12) als ein Einlegeteil ausgebildet ist.

12. Faserverbundkörper (2) nach einem der Ansprüche 9 bis 11, **dadurch gekennzeichnet, dass** das diffusionsoffene Formelement (12) zumindest eine Anbindung zu einem Struktursegment (24) aufweist, die insbesondere formschlüssig ausgebildet ist.

13. Faserverbundkörper (2) nach einem der Ansprüche 9 bis 12, **dadurch gekennzeichnet, dass** das diffusionsoffene Formelement (12) vollständig in die Preform-Struktur (14) integriert ist, insbesondere vollständig grenzschichtfrei mit der Preform-Struktur (14) verbunden ist.

14. Faserverbundkörper (2) nach einem der Ansprüche 9 bis 13, der mehrere diffusionsoffene Formelemente (12) aufweist.

## Claims

1. A method for manufacturing a fiber-reinforced composite body (2), in particular at least a portion of a wheel, comprising the following steps:
- providing a first mold (4) with at least a female mold (6) and a male mold,
- introducing a raw fiber material (8) and a binder (10) into the female mold (6), wherein the raw fiber material (8) consists of chopped fiber semi-finished products or fibers,
- activating the binder (10) by applying energy (p, T) to the mold (4) to form a diffusion-open molded element (12), wherein the molded element (12) has one or more recesses for integrating coupling load-bearing elements,
- joining the molded element (12) and a preform structure (14),
- supplying a resin so that the resin infiltrates, at least in some areas, into the diffusion-open molded element (12) as well as into the preform structure (14), and
- curing the resin so that the fiber-reinforced composite body (2) is thereby formed without a boundary layer.

2. The method according to the preceding claim, **characterized in that** a binder is mixed into the raw fiber material (8), wherein the binder is preferably thermoplastic, thermosetting, or a mixture of both.

3. The method according to any of the preceding claims, **characterized in that** a polyimide material is mixed into the raw fiber material (8).

4. The method according to any of the preceding claims, **characterized in that** one or more textile layers are integrated into the diffusion-open molded element (12) and/or that one or more textile layers are integrated when the diffusion-open molded element (12) is joined to the preform structure (14).

5. The method according to any of the preceding claims, **characterized in that** one or more functional elements are arranged, in particular integrated, in the diffusion-open molded element (12) and/or the preform structure (14).

6. The method according to any of the preceding claims, **characterized in that** the applied energy (p, T) is multi-stage and/or that the applied energy (p, T) comprises vacuum pressing or overpressure pressing or a clamping force of the at least one mold (4).

7. The method according to any of the preceding claims, **characterized in that** a matrix made of a thermosetting plastic or a thermoplastic or a mixture of thermosetting and thermoplastic is used.

8. The method according to any of the preceding claims, **characterized in that** the diffusion-open molded element (12) is connected, in particular by a form-fit, to a structural segment (24).

9. Fiber-reinforced composite body (2), in particular a wheel, made of a fiber-reinforced composite material comprising
- a diffusion-open molded element (12), wherein the molded element (12) has one or more recesses for integrating coupling load-bearing elements, and
- a preform structure (14) **characterized in that** the diffusion-open molded element (12) and the preform structure (14) are connected to one another without a boundary layer, at least in some areas.

10. The fiber-reinforced composite body (2) according to the preceding claim, **characterized in that** the diffusion-open molded element (12) and the preform structure (14) are connected to one another by a form-fit.

11. The fiber-reinforced composite body (2) according to either of the two preceding claims, **characterized in that** the diffusion-open molded element (12) is designed as an insert.

12. The fiber-reinforced composite body (2) according to any one of claims 9 to 11, **characterized in that** the diffusion-open molded element (12) has at least one connection to a structural segment (24), which is in particular designed to be form-fitting.

13. The fiber-reinforced composite body (2) according to any one of claims 9 to 12, **characterized in that** the diffusion-open molded element (12) is fully integrated into the preform structure (14), in particular is connected to the preform structure (14) completely without a boundary layer.

14. The fiber-reinforced composite body (2) according to any one of claims 9 to 13, comprising a plurality of diffusion-open molded elements (12).

## Revendications

1. Procédé de fabrication d'un corps en composite de fibres (2), notamment d'au moins une partie d'une roue, comprenant les étapes suivantes :
- Fournir une première forme (4) avec au moins une partie femelle (6) et une partie mâle,
- Introduire une matière première en fibres (8) et un liant (10) dans la partie femelle (6), la matière première fibreuse (8) étant des produits semi-finis en fibres ou des fibres finement coupés,
- Activer le liant (10) par un apport d'énergie (p, T) dans la forme (4) pour la formation d'un élément de forme ouvert à diffusion (12) dans lequel l'élément de forme (12) possède une ou plusieurs déformations pour l'intégration des éléments de charge couplant,
- Assembler de l'élément de forme (12) et d'une structure de préforme (14),
- Fournir une résine de sorte que la résine s'infiltre au moins partiellement dans l'élément de forme ouvert à diffusion (12) et dans la structure de la préforme (14), ainsi que
- Durcir de la résine, de sorte que le corps en composite de fibres (2) soit formé sans couche limite.

2. Procédé selon la revendication précédente, **caractérisé en ce qu'**un liant est ajouté à la matière première en fibres (8), le liant étant de préférence thermoplastique, thermodurcissable ou un mélange des deux.

3. Procédé selon l'une des revendications précédentes, **caractérisé en ce qu'**un matériau polyimide est ajouté à la matière première en fibres (8).

4. Procédé selon l'une des revendications précédentes, **caractérisé en ce qu'**une ou plusieurs couches textiles sont intégrées dans l'élément de forme ouvert à diffusion (12) et/ou qu'une ou plusieurs couches textiles sont intégrées lors de l'assembler de l'élément de forme ouvert à diffusion (12) avec la structure de préforme (14).

5. Procédé selon l'une des revendications précédentes, **caractérisé en ce qu'**un ou plusieurs éléments fonctionnels sont disposés, notamment intégrés, dans l'élément de forme ouvert à diffusion (12) et/ou la structure de préforme (14).

6. Procédé selon l'une des revendications précédentes, **caractérisé en ce que** l'apport d'énergie (p, T) est multi-étapes et/ou que l'apport d'énergie (p, T) comprend un pressage sous vide ou un pressage par surpression ou une force de fermeture de la au moins une forme (4).

7. Procédé selon l'une des revendications précédentes, **caractérisé en ce qu'**une partie femelle constituée d'un plastique thermodurcissable ou d'un plastique thermoplastique ou d'un mélange de plastique thermodurcissable et thermoplastique est utilisée.

8. Procédé selon l'une des revendications précédentes, **caractérisé en ce que** l'élément de forme ouvert à diffusion (12) est notamment connecté par engagement positif à un segment structurel (24).

9. Corps en composite de fibres (2), notamment roue, réalisé en matériau composite de fibres avec
- un élément de forme ouvert à diffusion (12) dans lequel l'élément de forme (12) présente une ou plusieurs déformations permettant d'intégration des éléments de charge couplant, ainsi qu'
- une structure de préforme (14) **caractérisée en ce que** l'élément de forme ouvert à diffusion (12) et la structure de préforme (14) sont connectés l'un à l'autre au moins dans certaines zones sans couche limite.

10. Corps en composite de fibres (2) selon la revendication précédente, **caractérisé en ce que** l'élément de forme ouvert à diffusion (12) et la structure de préforme (14) sont connectés l'un à l'autre par engagement positif.

11. Corps en composite de fibres (2) selon l'une des deux revendications précédentes, **caractérisé en ce que** l'élément de forme ouvert à diffusion (12) est conçu comme une pièce insérée.

12. Corps en composite de fibres (2) selon l'une des revendications 9 à 11, **caractérisé en ce que** l'élément de forme ouvert à diffusion (12) a au moins une connexion à un segment structurel (24), qui est notamment conçu pour avoir un engagement positif.

13. Corps en composite fibres (2) selon l'une des revendications 9 à 12, **caractérisé en ce que** l'élément de forme ouvert à diffusion (12) est complètement intégré dans la structure de préforme (14), notamment est connecté à la structure de préforme (14) complètement sans couche limite.

14. Corps en composite fibres (2) selon l'une des revendications 9 à 13, comprenant plusieurs éléments de forme ouvert à diffusion (12).
